# EUROPÄISCHE PATENTSCHRIFT

(11) **EP 3 014 975 B1**
(45) Veröffentlichungstag und Bekanntmachung des Hinweises auf die Patenterteilung: **23.05.2018**
(21) Anmeldenummer: 15182737.5
(22) Anmeldetag: 27.08.2015
(51) Int. Cl.: A01D 75/18, A01D 34/416, A01D 34/78, A01D 34/90, A01D 101/00

(54) **GARTENGERÄTEVORRICHTUNG UND VERFAHREN ZU DEREN BETRIEB**
GARDEN DEVICE AND METHOD FOR ITS OPERATION
DISPOSITIF D'OUTIL DE JARDINAGE ET SON PROCEDE DE FONCTIONNEMENT

(30) Priorität: 31.10.2014 DE 102014222328; 22.12.2014 DE 102014226742
(43) Veröffentlichungstag der Anmeldung: 04.05.2016
(73) Patentinhaber: ROBERT BOSCH GMBH, 70442 Stuttgart (DE)
(72) Erfinder: Zipf, Philipp, 70435 Stuttgart-Zuffenhausen (DE); Koepf, Christian, Wherstead, IP92BA (GB)

(56) Entgegenhaltungen:
- EP-A1- 1 922 913
- WO-A2-96/05719
- US-A1- 2009 229 131

## Beschreibung

### Stand der Technik

Die Erfindung betrifft eine Vorrichtung und ein Verfahren zum Betrieb einer Gartenbearbeitungsmaschine nach der Gattung der unabhängigen Ansprüche.

Aus EP 2 272 317 A1 ist ein System zum Lösen blockierter Mähspindeln an einem Rasenmäher bekannt. Die Mähspindel kann in einer Vorwärtsrichtung und einer Rückwärtsrichtung drehen. Wenn bei einem Starten des Spindelmotors nicht eine voreingestellte Mindestdrehzahl erreicht wird, wird dies durch einen zwischen einem Regler und einem Spindelmotor angeschlossenen Sensor, der die Drehzahl des Motors abfühlt, erkannt. Der Regler leitet dann zum Lösen der blockierten Mähspindel eine Richtungsumkehr des Spindelmotors ein.

Aus der US 2009/0229131 A1 ist ein Freischneider bekannt, der nebst einem An-Ausschalter zur Aktivierung der Antriebseinheit einen zusätzlichen Not-Aus oder Richtungsumkehrschalter aufweist, welcher zur Notbremsung oder in Verbindung mit einer nachgelagerten manuellen Aktivierung des An-Ausschalters der Richtungsumkehr der Schneidvorrichtung, beispielsweise im Blockierfall der Schneidvorrichtung dient. Die Blockierfallerkennung, Abschaltung der Antriebseinheit und die Drehrichtungsumkehr sowie deren Zeitsteuerung und Abfolge erfolgen manuelle.

Aus der EP 1922 913 A1 ist ein Freischneider bekannt dessen Steuereinheit einen Blockierfall der Schneidvorrichtung erkennt und zur Energieeinsparung entweder die Stromzufuhr unterbricht, die Bewegungsgeschwindigkeit der Schneidvorrichtung zumindest für ein gewisse Zeitdauer verlangsamt oder den Motor bzw. die Schneidvorrichtung abschaltet und stoppt.

Aufgabe der Erfindung ist es die Bedienfreundlichkeit der Gartenbearbeitungsmaschine im Blockierfall zu erhöhen.

### Offenbarung der Erfindung

Die Erfindung geht aus von einer Gartenbearbeitungsmaschine, insbesondere einem Rasenmäher oder Freischneider, mit zumindest einem Schneidmesser oder einem Schneidfaden zum Schneiden von Gras, mit einer Antriebseinheit zum rotierenden Antreiben des Schneidmessers oder des Schneidfadens zumindest in eine Vorzugsrichtung, mit einer Steuer- oder Regeleinheit zur Steuerung oder Regelung der Antriebseinheit und mit einer Benutzerschnittstelle, die bei einer Betätigung zumindest Steuersignale zur Aktivierung der Antriebseinheit an die Steuer- oder Regeleinheit ausgibt.

Es wird vorgeschlagen, dass die Steuer- oder Regeleinheit zumindest zur Erkennung eines Blockierfalls des Schneidmessers oder des Schneidfadens vorgesehen ist und die Antriebseinheit bei einer Detektion des Blockierfalls abschaltet. Erst bei einer erneuten Betätigung der Benutzerschnittstelle steuert oder regelt die Steuer- oder Regeleinheit die Antriebseinheit derart, dass die Antriebseinheit das Schneidmesser oder den Schneidfaden nach einer ersten Zeitspanne zumindest für eine zweite Zeitspanne entgegen der Vorzugsrichtung antreibt.

Unter "Gartenbearbeitungsmaschine" soll insbesondere eine handgeführte Maschine zur bevorzugten Nutzung im Garten verstanden werden. Sie kann aber auch auf Äckern oder Feldern, generell in der Flora oder Natur, und beispielsweise auch zum Schneiden von Ästen und Sträuchern eingesetzt werden, besonders aber zum Schneiden von Gras. Unter einem "Rasenmäher" soll insbesondere ein handgeführter, ein selbstfahrender bzw. oder ein zu schiebender Rasenmäher, insbesondere mit Hilfsantrieb, verstanden werden. Es kann sich aber auch um einen autonomen Rasenmäher handeln, wobei die Benutzerschnittstelle dann vorzugsweise auf einem mit dem Rasenmäher in Verbindung stehenden HMI-Gerät untergebracht ist. Unter HMI-Gerät soll beispielsweise eine Fernsteuerung oder ein mobiles Endgerät, insbesondere mit einer betätigbaren Applikation, zum Steuern des Rasenmähers verstanden werden. Ferner soll unter Rasenmäher auch ein Mulcher verstanden werden. Unter einem "Freischneider" ist ebenfalls ein von einem Anwender zu führendes motorbetriebenes Gartengerät, insbesondere ein tragbares oder gegebenenfalls auch mit Rädern ausgestattetes Gartengerät zum Schneiden von Gras, Ästen, Baum- und Buschwerk zu verstehen. Ferner soll unter einem Freischneider auch ein Rasen- oder Grasschneider oder ein Rasentrimmer verstanden werden. Der Freischneider weist typischerweise zumindest ein Schneidmesser, Schneidblatt oder einen Schneidfaden auf. Dieses/-er ist bevorzugt in einer Aufnahme befestigt und mit einer Antriebswelle verbunden. Die Aufnahme und das Schneidmesser, Schneidblatt oder der Schneidfaden können auch Schneidmesser-, Schneidblatt- oder Schneidfadeneinheit bezeichnet werden.

Unter einem "Schneidmesser" kann ein Messer, ein Balken, ein runder Gegenstand wie beispielsweise eine Stange, bevorzugt aber ein im wesentlichen flächiges, gegebenenfalls gewundenes, Blatt verstanden werden. Das Schneidmesser oder Blatt ist typischerweise im Wesentlichen senkrecht zu einer Antriebswelle angeordnet. Ferner wird es bevorzugt von der Antriebswelle mittig angetrieben, so dass es sozusagen um die Wellenachse rotiert. Es kann Schneiden, bevorzugt schlägt es aber Gegenstände durch eine hohe Relativgeschwindigkeit zum zu schneidenden bzw. trennenden Gegenstand ab.

Unter "Vorzugsrichtung" ist eine Rotation in der Richtung zu verstehen, an der das Schneidmesser beispielsweise angeformt, angeschliffen oder geschärft ist beziehungsweise eine angeformte oder angeschliffene Schneidkante aufweist. Es kann aber auch Schneidmesser geben welche keine angeformt oder angeschliffene Schneidkante aufweisen. In diesen Fällen weist der Motor schlicht eine Vorzugsdrehrichtung auf die geräteabhängig links- oder rechtsläufig sein kann. Ferner können auch mehr als ein Schneidmesser oder Schneidfaden in bzw. an der Gartenbearbeitungsmaschine angeordnet sein. Insbesondere können zwei Schneidmesser oder Schneidfäden in zwei zueinander beabstandeten, insbesondere parallel versetzten Ebenen, besonders bevorzugt auf einer Welle, angeordnet sein. Die zwei oder mehr Schneidmesser oder Schneidfäden rotieren bevorzugt in Rotationsrichtung betrachtet zueinander winkelversetzt gleichsinnig oder gegenläufig. Der Winkelversatz kann prinzipielle zwischen 0 und 180°, bevorzugt aber zwischen 5 und 90° betragen. Solche gleich- oder gegenläufig rotierende Schneidmesser oder Schneidfäden kommen beispielsweise in sogenannten Mulchern zum Einsatz. Unter einem Mulcher soll eine Sonderform eines Rasenmähers verstanden werden, weshalb im Folgenden unter einem Rasenmäher auch ein Mulcher zu verstehen ist.

Unter "Antriebseinheif soll beispielsweise ein Elektro- oder Verbrennungsmotor verstanden werden. Der Elektromotor kann sowohl netz- als auch akkugespeist sein. Es kann sich ferner um einen Wechselstrom oder einen Geleichstrommotor, insbesondere um einen EC-Motor handeln. Generell sind unter Antriebseinheit aber auch weitere Antriebsstrangkomponenten der Gartenbearbeitungsmaschine wie beispielsweise Getriebe, Ketten, Riemen, Wellen, Kupplungen etc. zu verstehen. Dabei sind diese Antriebsstrangkomponenten bevorzugt zum rotierenden Antreiben des Schneidmessers vorgesehen. Sie ändern insbesondere ein Übersetzungsverhältnis, überbrücken Distanzen zwischen Antrieb und Schneidmesser, ermöglichen eine Drehrichtungsumkehr oder sind Sicherheitsvorrichtungen wie beispielsweise Überlastschutzvorrichtungen z.B. eine Rutschkupplung. Darunter dass die Antriebseinheit ein Schneidmesser oder Schneidfaden "rotierend antreibt" soll verstanden werden, dass die Antriebseinheit zumindest mittelbar zumindest das Schneidmesser drehend antreibt. Insbesondere ist die Antriebseinheit in der Lage zumindest das Schneidmesser in eine Vorzugs- und eine Gegenvorzugsrichtung drehend bzw. rotierend anzutreiben, insbesondere in dessen Umfangsrichtung.

Die "Steuer- oder Regeleinheit" ist bevorzugt zur Steuerung oder Regelung der Antriebseinheit vorgesehen, insbesondere zur Steuerung oder Regelung einer Drehzahl und/oder eines Stroms. Unter Steuer- oder Regeleinheit soll insbesondere eine Einheit mit zumindest einer Steuerelektronik mit einer Prozessoreinheit und mit einer Speichereinheit sowie mit einem in der Speichereinheit gespeicherten Betriebsprogramm verstanden werden. Die Steuer- oder Regeleinheit empfängt vorzugsweise elektrische Signale. Diese erhält sie beispielsweise von der Benutzerschnittstelle, insbesondere bei deren Betätigung, insbesondere durch einen Anwender. Ferner kann ein Sensorsignal bei einer Steuerung und Regelung der Antriebseinheit berücksichtigt werden. Hierzu ist die Steuer- oder Regeleinheit vorzugsweise zumindest elektrisch und/oder datentechnisch mit dem Sensor verbunden. Hierbei kann die Steuer- oder Regeleinheit drahtgebunden und/oder drahtlos mit dem Sensor verbunden sein. Gleichermaßen kann die Übertragung auch zwischen der Benutzerschnittstelle und der Steuer- oder Regeleinheit erfolgen.

Die Steuer- oder Regeleinheit umfasst zumindest ein Betriebsprogramm, das zumindest einen Algorithmus zu einer Bestimmung einer vorliegenden Drehzahl bzw. einem Strom der Antriebseinheit aus dem Sensorsignal aufweist. Damit erfasst die Steuer- oder Regeleinheit bevorzugt einen Betriebszustand der Gartenbearbeitungsmaschine. Das Sensorsignal ist in diesem Zusammenhang bevorzugt ein Spannungs- und/oder Stromsignal, das zur Steuerung oder Regelung von Betriebsparameter der Gartenbearbeitungsmaschine dient. Neben der Drehzahl und/oder dem Strom der Antriebseinheit kann auch die Zeit oder eine Zeitdauer, insbesondere die Zeit nach einer Betätigung der Benutzerschnittstelle, nach einer Drehzahl- oder Stromänderung, oder die Zeit nach der Erkennung eines Blockierfalls einen Betriebsparameter der Gartenbearbeitungsmaschine bilden. Ferner können insbesondere benutzerspezifische Voreinstellungen, das verwendete Schneidmesser, oder der verwendete Schneidfaden, sowie Temperatur, Feuchte und das zu schneidende Schnittgut Betriebsparameter bilden. Zudem liefert auch der zumindest eine Sensoren Betriebsparameter der Gartenbearbeitungsmaschine.

Unter "Benutzerschnittstelle" soll insbesondere ein Schalter, ein Taster, ein entsprechend betätigbarer Sensor-Griff zumindest zur Inbetriebnahme des Rasenmähers verstanden werden. Synonym zur Benutzerschnittstelle kann auch der Begriff Betätigungsschnittstelle verstanden werden. Es kann sich auch um eine Kombination aus mehreren Schaltern, insbesondere zur zweihändigen Bedienung handeln. Ferner sind Drehgriffe, Bremsgriffe, Hebel, und auch weitere neuartige Schalter insbesondere als HMI denkbar. Als Benutzerschnittstelle sind ferner Steuer- und Regelelemente, insbesondere Kombinationsschalter, Bügelschalter, Sicherheitsschalter, Totmannschalter und dergleichen zu verstehen. Die Benutzerschnittstelle erfordert vorzugsweise eine von einem Anwender aufzubringende Haltekraft, insbesondere gegen eine Rückstellkraft oder automatische Rückführungskraft. Die Benutzerschnittstelle wird somit bevorzugt drückend, drehend, ziehend, schiebend, tretend oder schwenkend, sowie möglicherweise auch akustisch betätigt. Die Benutzerschnittstelle übermittelt die Steuersignale, insbesondere in Form von kabelgebundenen oder -losen Spannungs- oder Stromsignalen an die Steuer- oder Regeleinheit.

Unter "Steuersignal" soll beispielsweise ein Start-, Stopp-, Standby-, Beschleunigungs- oder Verzögerungsbefehl verstanden werden. Ferner kann darunter eine Drehzahl-, Stromstärke, Zeitsignal, ein Anfahr- oder Abschaltbefehl oder generell ein Betriebsbefehl des Rasenmähers verstanden werden. Unter "Aktivierung" soll insbesondere eine Inbetriebnahme, ein Hochlaufen der Antriebseinheit, eine Variation von Betriebsparametern der Antriebseinheit, eine Steuerung der Stromaufnahme oder Spannung der Antriebseinheit verstanden werden.

Unter "Blockierfall" ist insbesondere ein Drehzahlabfall, eine Schwergängigkeit oder ein Stillstand der Antriebseinheit bzw. des Schneidmessers oder Schneidfadens zu verstehen. Der Blockierfall kann insbesondere in Abhängigkeit der Gartenbearbeitungsmaschine bereits bei einem Unterschreiten einer Solldrehzahl oder Unterschreiten eines Solldrehzahlbereichs, insbesondere für eine Mindestdauer, vorliegen. Der Blockierfall wird beispielsweise durch eine Schnittgutanhäufung im Bereich des Schneidmessers oder Schneidfadens, sich insbesondere zwischen einer Fangvorrichtung und dem Schneidmesser verkeilende Gegenstände oder durch einen Schnittgutrückstau, insbesondere aus einem Auffangbehälter der Gartenbearbeitungsmaschine, hervorgerufen. Ferner kann der Blockierfall auch durch sich um das Schneidmesser, den Schneidfaden oder deren Aufnahme wickelnde Gegenstände, insbesondere Gras, aber beispielsweise auch eine Leine oder Gestrüpp hervorgerufen sein.

Darüber hinaus ist ein erster und ein zweiter Blockierfall zu unterscheiden. Ein erster Blockierfall liegt dann vor, wenn die Gartenbearbeitungsmaschine eine Mindestdrehzahl für eine Mindestzeitdauer unterschreitet, insbesondere nachdem ein Blockierfallfreigabedrehzahlwert überschritten.

Darunter dass die Antriebseinheit "abschaltet", soll insbesondere eine Stromlosschaltung, eine Abbremsung oder eine kontrollierte Abbremsung der Antriebseinheit verstanden werden. Die kontrollierte Abbremsung kann insbesondere stromgebremst erfolgen. Bevorzugt ist in allen Fällen ein vollständiger Stillstand der Antriebseinheit innerhalb von weniger als 5 sec (Sekunden), bevorzugt innerhalb weniger als 3 sec und ganz besonders bevorzugt innerhalb weniger als 1 sec vorgesehen. Eine Stromlosschaltung eignet sich beispielsweise nach der Detektion des Blockierfalls bei geringen Ausgangsdrehzahlen, wobei unter "Ausgangsdrehzahl" die Drehzahl zum Zeitpunkt der Detektion des Blockierfalls zu verstehen ist. Dabei trudelt die Antriebseinheit und/oder zumindest das/der damit verbundene Schneidmesser/Schneidfaden aus. Eine aktive insb. kontrollierte Abbremsung kann insbesondere mittels Strom-, Trommel-, oder Scheibenbremsung erfolgen. Die kontrollierte Abbremsung findet bevorzugt bei höheren Ausgangsdrehzahlen Anwendung. Die Strombremsung erfolgt bevorzugt durch Gegenfeldaufprägung oder Kurzschlussschaltung. Darunter dass die Antriebseinheit das Schneidmesser "entgegen" der Vorzugsrichtung antreibt soll insbesondere rückwärts, in Gegenrichtung zur Vorzugsrotationsrichtung bzw. gegenläufig zur Schneidrichtung verstanden werden.

Unter einer "definierten Zeitdauer" soll insbesondere eine Mindestdauer von beispielsweise 0 bis 5 sec, insbesondere eine Mindestdauer von 0,1 sec, 0,3 sec, 1 sec, 2 sec, 2,8 sec, 3 sec oder 5 sec, verstanden werden. Diese Mindestdauer wird beispielsweise ab der Erfassung eines Ereignisses durch die Steuer- und Regeleinheit berechnet, bzw. gezählt. Das Ereignis ist insbesondere die Erfassung eines Blockierfalls, das Betätigen oder erneute Betätigen der Benutzerschnittstelle, das Starten der Antriebseinheit, die Drehrichtungsumkehr, der Moment des Stillstands des Schneidmessers oder der Antriebseinheit oder dergleichen. Die definierte Zeitdauer kann aber auch durch eine Zeitdauer bis zu einer Erreichung einer Grenz-, Mindest- oder Maximaldrehzahl der Antriebseinheit bzw. des Schneidmessers festgelegt sein. Ferner kann es auch die Dauer bis zu einer Erreichung eines Grenz-, Mindest- oder Maximalstroms sein, der beispielsweise an der Antriebseinheit, der Steuer- oder Regeleinheit oder am Akkumulator anliegt bzw. darin fließt. Ferner kann die definierte Zeitdauer auch durch Erreichen eines Grenz-, Mindest- oder Maximalwerts eines Druckes, einer Kraft oder eine Drehmoments an zumindest einer Antriebsstrangkomponente der Gartenbearbeitungsmaschine festgelegt sein. All diese Werte und Dauern sind typischerweise gerätespezifisch. Sie unterscheiden sich beispielsweise für einen Rasenmäher oder Freischneider, insbesondere in Abhängigkeit der typischen Betriebsdrehzahlen und Antriebsströme, sowie beispielsweise der Trägheit des Schneidmessers bzw. des Schneidfadens oder vielmehr der Einheit aus Schneidmesser bzw. Schneidfaden und dessen Aufnahme.

Darüber hinaus steuert oder regelt die Steuer- oder Regeleinheit die Antriebseinheit derart, dass sie die Antriebseinheit insbesondere nach Detektion des ersten Blockierfalls, in der ersten Zeitspanne erneut in Vorzugsrotationrichtung antreibt. Die erste Zeitspanne ist beendet sobald zumindest eine erste Mindestdauer abgelaufen ist, oder ein erster Schwellwert einer Drehzahl, eines Stroms, einer Kraft, eines Drehmoments der Antriebseinheit oder eines Drucks innerhalb einer Fangvorrichtung der Gartenbearbeitungsmaschine erreicht, unter- oder überschritten ist. Dabei beträgt die erste Mindestdauer insbesondere 0 bis 1 sec, bevorzugt 0,1 bis 0,5 sec und besonders bevorzugt 0,3 sec. Der erste Schwellwert der Drehzahl beträgt bevorzugt mehr als 15 rpm, insbesondere mehr als 30 rpm. Der erste Schwellwert der Stromstärke beträgt bevorzugt weniger als 75 % des maximal an der Antriebseinheit anliegenden Stroms, insbesondere weniger als 50% und ganz besonders bevorzugt weniger als 25 %.

Die zweite Zeitspanne ist beendet sobald zumindest für oder nach eine zweiten Mindestdauer, ein zweiter Schwellwert einer Drehzahl, eines Stroms, einer Kraft, eines Drehmoments der Antriebseinheit oder eines Drucks innerhalb einer Fangvorrichtung der Gartenbearbeitungsmaschine erreicht, unter oder überschritten ist. Dabei beträgt die zweite Mindestdauer insbesondere 0 bis 2 sec, bevorzugt 0,5 bis 1,5 sec und besonders bevorzugt 0,66 sec beim Freischneider und 1 sec beim Rasenmäher. Der zweite Schwellwert der Drehzahl beträgt insbesondere mehr als 30 rpm, bevorzugt mehr als 50 rpm und ganz besonders bevorzugt 100 rpm. Der zweite Schwellwert der Stromstärke beträgt bevorzugt weniger als 75 % des maximal an der Antriebseinheit anliegenden Stroms, insbesondere weniger als 50% und ganz besonders bevorzugt weniger als 25 %.

Vorteilhafterweise wird durch die Erfindung die Sicherheit, insbesondere für einen Anwender der Gartenbearbeitungsmaschine, gesteigert. Falls nämlich, wie nach dem Stand der Technik bekannt, eine Drehrichtungsumkehr unmittelbar bei Erkennen eines Blockierfalls eingeleitet wird, und der Anwender die Betätigungsschnittstelle nicht erneut betätigen muss, um zumindest auch eine Drehrichtungsumkehr einzuleiten, stellt dies gerade bei handgehalten bzw. handgeführten Gartenbearbeitungsmaschinen für den Anwender eine Gefahr dar. Eine Drehrichtungsumkehr ist nämlich für einen Anwender nicht unmittelbar nachvollziehbar. Der Anwender kann die Drehrichtung des Schneidmessers bzw. des Schneidfadens typischerweise nicht erkennen, sei es weil die Sicht auf das Schneidmesser oder den Schneidfaden verdeckt ist oder dessen Drehzahl so hoch ist, dass es unmöglich ist, die Drehrichtung mit bloßem Auge zu erkennen.

Ferner ist es vorteilhaft, dass der Blockierfall frühzeitig detektiert wird, insbesondere bevor der Drehzahlabfall, die Blockade, oder den Stillstand des Motors bzw. Schneidmesser oder Schneidfadens für einen Anwender spürbar oder hörbar ist. Zudem wird ein Verschleiß an dem Antriebsstang- und Elektronikbauteilen der Gartenbearbeitungsmaschine reduziert, insbesondere da ein herkömmlicher Blockadefall einer Gartenbearbeitungsmaschine ohne eine Blockierfalldetektion zu erhöhten Kräften und Momenten an Gerätebauteilen, bis hin zur Überlastung der Gartenbearbeitungsmaschine und ihrer Bauteile führen kann. Darüber hinaus kann Energie, insbesondere wegen Vermeidung eines schwergängigen Betriebs der Gartenbearbeitungsmaschine, beispielsweise bei einem gefüllten Auffangbehältnis eines Rasenmähers, eingespart werden. Länger andauernder erhöhter Widerstand wegen schwergängiger Bauteile, kann vermieden werden, was insbesondere die Betriebsdauer der Gartenbearbeitungsmaschine pro Akkuladung steigert. Durch die Notwendigkeit des erneuten Betätigens der Benutzerschnittstelle nach der Detektion eines Blockierfalls wird der Anwender der Gartenbearbeitungsmaschine intuitiv gewarnt und auf den Blockierfall hingewiesen. Bei erneuter Betätigung der Benutzerschnittstelle ist der Anwender nunmehr auf eine Drehrichtungsumkehr vorbereitet und kann die Vorzüge der automatischen Freidrehung bzw. Freischneidung des Schneidmessers bzw. Schneidfadens ohne Verunsicherung nutzen. Dadurch wird die Anwenderfreundlichkeit erhöht und die Sicherheit gesteigert.

Erfindungsgemäß wird ferner vorgeschlagen, dass die Steuer- oder Regeleinheit die Antriebseinheit derart steuert oder regelt, dass die Antriebseinheit das Schneidmesser oder den Schneidfaden nach der zweiten Zeitspanne erneut in Vorzugsrichtung antreibt. Die Steuer- oder Regeleinheit steuert oder regelt die Antriebseinheit derart, dass diese solange in Vorzugsrichtung angetrieben wird bis für oder nach einer weiteren Mindestdauer, einen weiteren Schwellwert einer Drehzahl, eines Stroms, einer Kraft, eines Drehmoments der Antriebseinheit, oder eines Drucks innerhalb einer Fangvorrichtung der Gartenbearbeitungsmaschine erreicht, unter oder überschritten ist. Dabei beträgt die zweite Mindestdauer insbesondere 0 bis 5 sec, bevorzugt 1 bis 3 sec und besonders bevorzugt 2 sec beim Freischneider und 2,8 sec beim Rasenmäher. Der zweite Schwellwert der Drehzahl beträgt insbesondere weniger als 50 rpm beim Freischneider und weniger als 200 rpm beim Rasenmäher. Der weitere Schwellwert der Stromstärke beträgt bevorzugt mehr als 50 %, insbesondere mehr als 75 % und ganz besonders bevorzugt 100 % des maximal an der Antriebseinheit anliegenden Stroms. Trifft zumindest eines dieser Kriterien zu tritt ein weiterer Blockierfall ein. Das Vorgehen analog der ersten und zweiten Zeitspanne wird wiederholt. Da der Anwender aufgrund des erneuten Betätigens bereits den Blockierfall und die potentielle Drehrichtungsumkehr aktiv einleitet, ist die erneute Drehrichtungsumkehr nach der zweiten Zeitspanne zurück in Vorzugsrichtung gefahrlos für den Anwnder. Vorteilhafterweise wird dadurch Stillstandszeit gespart. Ein unmittelbarer, durch die Steuer- und Regeleinheit eingeleiteter Versuch, die Bearbeitung bzw. die Rotation in Vorzugsrichtung fortzusetzen, ist somit anwenderfreundlich. Falls der Blockierfall durch eine lokale bzw. temporäre Anhäufung von Schnittgut erfolgte, ist die unmittelbare weitere Bearbeitung wünschenswert und vorteilhaft.

Darüber hinaus wird erfindungsgemäß vorgeschlagen, dass die Steuer- oder Regeleinheit den Blockierfall mittels eines Sensors, insbesondere mittels eines an der Motoreinheit, dem Schneidmesser, oder der Aufnahme des Schneidmessers oder Schneidfadens oder zumindest an der Gartenbearbeitungsmaschine applizierten und mit der Steuer- oder Regeleinheit in Verbindung stehenden Hall-, Strom, Kraft-, Druck- oder Drehmomensensors, erkennt. Unter einem "Drehzahlabfall" soll der Fall verstanden werden, bei dem die Drehzahl unter einen Schwellwert fällt. Insbesondere nach vorherigem Überschreiten des Blockierfallfreigabewerts. Unter "Stromzunahme" soll eine Erhöhung des von der Antriebseinheit, insbesondere des Elektromotors, aufgenommenen Stroms, oder des von der Akkumulatoreinheit abgegebenen Stroms, oder eine Erhöhung des mittels der Steuer- oder Regeleinheit erfassten fließenden Stroms zumindest zwischen Akkumulatoreinheit und Antriebseinheit, verstanden werden. Darüber hinaus lässt mittels des Kraft- oder Drehmomentsensors erfasster Kraft- oder Drehmomentanstieg, insbesondere an der Motorwelle der Antriebseinheit erfasster Kraft- oder Drehmomentanstieg,eine Erkennung des Blockierfalls zu. Ferner kann die Kraft oder das Drehmoment auch an einer beliebigen anderen Antriebsstrangkomponente abgegriffen werden, beispielsweise der Schneidmesser- und/oder Schneidfadeneinheit. Die Kraft kann darüber hinaus beispielsweise in einem Antriebsriemen, ein Drehmoment beispielsweise in der Schneidmesserantriebswelle erfasst werden. Der Hallsensor kann insbesondere an oder in der Antriebseinheit, insbesondere an deren Motorwelle, ferner dem Schneidmesser oder einer Fangvorrichtung angebracht sein, um die Drehzahl der Antriebseinheit oder des Schneidmesser zumindest indirekt zu bestimmen. Der Drucksensor kann beispielsweise innerhalb der Fangvorrichtung oder einem Schnittgutauslass aus der Fangvorrichtung, bevorzugt auch in einem Auffangbehältnis der Gartenbearbeitungsmaschine angeordnet sein. Mittels des Drucksensors lässt sich, insbesondere bei dem sich füllenden oder zusetzenden Auffangbehälter und/oder sich zusetzender Fangvorrichtung, ein Druckanstieg ermitteln. Der Druckanstieg lässt Rückschlüsse auf den Füllstand des Auffangbehälters, sowie bevorzugt einen bevorstehenden Blockierfall, insbesondere aufgrund übermäßiger Befüllung des Auffangbehälters, zu. Unter Schneidmesser- oder Schneidfadeneinheit soll zumindest eine Einheit aus Schneidmesser oder Schneidfaden mit der Aufnahme, insbesondere zusammen mit Befestigungsmitteln und ggf. einem Gehäuse zur Aufnahme von Reservefaden sowie ggf. weiteren Komponenten, verstanden werden.

Vorteilhafterweise lässt sich der Blockierfall mittels der vorgenannten Sensoren in einem frühen Stadium erkennen. Zudem kann die Steuer- oder Regeleinheit, beispielsweise aufgrund des Gradienten der Sensorausgabegröße, Rückschlüsse auf das den Blockierfall vermutlich auslösende Ereignis bzw. den auslösenden Gegenstand zu. So können insbesondere entsprechende Hinweise an den Anwender übermittelt, oder entsprechende Steuer- oder Regelroutinen genutzt werden, um bevorzugt situativ auf den Blockierfall zu reagieren.

Es wird ferner vorgeschlagen, dass die die Steuer- oder Regeleinheit den Blockierfall zumindest an einer Motorwelle der Antriebseinheit, sensorlos, insbesondere aus Parametern der Steuer- oder Regeleinheit, erkennt. Unter "Parametern" der Steuer- oder Regeleinheit, sollen insbesondere der/die, bevorzugt an der Antriebseinheit, anliegende Strom/Spannung verstanden werden. Ferner ist darunter auch die Zeit und insbesondere der zeitliche Verlauf von Strom und Spannung zu verstehen. Die Parameter und insbesondere deren Periodizität geben Rückschlüsse auf die vorliegende Drehzahl zumindest der Antriebseinheit, welche insbesondere von der Steuer- oder Regeleinheit ausgewertet werden können. Falls doch ein Sensor zumindest zur Erfassung des Blockierfalls Anwendung findet, kann dadurch ein redundantes System zur Erfassung des Blockierfalls mittels des oder der Sensors/-en und /oder sensorlos bereitgestellt werden.

Erfindungsgemäß gibt die Gartenbearbeitungsmaschine bei der Erkennung eines Blockierfalls, insbesondere über die Benutzerschnittstelle, ein akustisches, ein taktiles oder ein optisches Signal aus. Insbesondere kann dies ein Piktogramm, eine Ampelschaltung, ein Ton, beipspielsweise ein Alarmton oder Alarmsignal sein. Ebenfalls ist ein Vibrieren der Benutzerschnittstelle, insbesondere ein sich von den gartengeräteimmanenten Betriebsvibrationen unterscheidendes Vibrieren, vorstellbar. Ferner kann das Signal auch die aktuelle Drehrichtung, Drehzahl oder Zeit, insbesondere eine Zeit bis zur Drehrichtungsumkehr beinhalten. Dies kann beispielsweise auf einem Display visualisiert werden. Zudem kann das Signal zum Betätigen oder Lösen der Benutzerschnittstelle, insbesondere als eine Vorgabe für den Anwender, ausgegeben werden. Vorteilhaft unterstütz das Signal den Anwender beim Erkennen des Blockierfalls. Zudem kann das Signal den Benutzer zumindest warnen, oder ihm vorteilhafterweise weitere Informationen über den Blockierfall oder das weitere Vorgehen mitteilen. Diese Funktion erhöht den Anwenderkomfort und steigert ebenfalls die Bediensicherheit für den Anwender.

Zudem wird vorgeschlagen, dass die Steuer- oder Regeleinheit die Antriebseinheit beim Antrieb entgegen der Vorzugsrichtung mit maximal verfügbarem Strom ansteuert. Beispielsweise beträgt der maximal Strom für einen Rasenmäher 94 A (Ampere) und für einen Freischneider 25 A. Insbesondere entspricht dieser Stromwert dem im regulären Betrieb maximal zur Verfügung stehenden Strom, oder übersteigt diesen bevorzugt um einen den regulär maximalen Stromwert übersteigenden Entblockierstrom. Vorteilhafterweise kann dadurch das blockierte Schneidmesser oder die blockierte Schneidfadeneinheit freigefahren bzw. freigedreht werden. Zudem kann die Zeitdauer insbesondere des auf den Blockierfall folgenden ersten und zweiten Zeitintervalls durch die Maximalstrombeaufschlagung der Antriebseinheit verkürzt werden.

Ferner wird ein Verfahren zum Betreiben einer Gartenbearbeitungsmaschine, insbesondere eines Rasenmähers oder eines Freischneiders, mit einer Benutzerschnittstelle und mit einer Antriebseinheit zum rotierenden Antreiben zumindest eines Schneidmessers oder Schneidfadens zum Schneiden von Gras vorgestellt, wobei das Schneidmesser oder der Schneidfaden durch die Antriebseinheit, nach Betätigen der Benutzerschnittstelle, in eine Vorzugsrichtung angetrieben wird.

Erfindungsgemäß wird die Antriebseinheit, nach einer Detektion eines Blockierfalls des Schneidmessers oder Schneidfadens abgeschaltet, wobei das Schneidmesser oder der Schneidfaden durch die Antriebseinheit, bei einer erneuten Betätigung der Benutzerschnittstelle, nach einer ersten definierten Zeitspanne, für zumindest eine zweite definierte Zeitspanne entgegen der Vorzugsrichtung angetrieben wird.

In einer Weiterbildung der Erfindung wird ein Verfahren vorgestellt wobei der Blockierfall vorliegt, wenn für eine Mindestdauer, insbesondere von mehr als 0,1 Sekunden, bevorzugt mehr als 0,3 Sekunden, besonders bevorzugt von 0-5 Sekunden und ganz besonders bevorzugt von 1 Sekunde im Falle eines Rasenmähers oder 3 Sekunden im Falle eines Freischneiders, eine Antriebsdrehzahl der Antriebseinheit einen Soll- oder Schwellwert unterschreitet, insbesondere von weniger als 2500 rpm (Umdrehungen pro Minute) oder weniger als 1500 rpm, ferner von weniger als 500, oder weniger als 50 Umdrehungen pro Minute, bevorzugt weniger als 30 Umdrehungen pro Minute, besonders bevorzugt 0 Umdrehungen pro Minute, und/oder eine Stromaufnahme der Antriebseinheit einen Sollwert übersteigt, insbesondere einen Sollwert von mehr als 10 A (Ampere), bevorzugt von mehr als 25 A oder mehr als 94 A.

Ferner wird ein Verfahren vorgeschlagen, wobei das Schneidmesser innerhalb der ersten definierten Zeitspanne erneut in Vorzugsrichtung angetrieben wird.

Darüber hinaus wird ein Verfahren vorgeschlagen wobei die erste und die zweite Zeitspanne durch ein Unter- oder Überschreiten eines ersten oder zweiten Schwellwerts für eine Drehzahl der Antriebseinheit und/oder durch ein Über- oder Unterschreiten eines ersten oder zweiten Schwellwerts für eine Stromaufnahme der Antriebseinheit und/oder durch eine erste oder zweite Zeitdauer definiert sind.

Zudem wird erfindungsgemäß ein Verfahren vorgestellt, wobei für die erste Zeitspanne nach einer Mindestzeitdauer von 0,1 Sekunden, insbesondere einer Mindestzeitdauer von 0,3 Sekunden, der Schwellwert für die Drehzahl der Antriebseinheit weniger als 50 rpm, insbesondere weniger als 30 rpm und/oder der Schwellwert für den Strom der Antriebseinheit mehr als 10 A, insbesondere mehr als 25 A im Falle eines Freischneiders, oder 94 A im Falle eines Rasenmähers beträgt.

Desweiteren wird ein Verfahren vorgeschlagen, wobei für die zweite Zeitspanne der Schwellwert für die Drehzahl der Antriebseinheit mindestens 50 rpm, bevorzugt 100 rpm und/oder die Zeitdauer 0 bis 3 sec, insbesondere 1 sec und/oder der Schwellwert für den Strom der Antriebseinheit mehr als 10 A, insbesondere 25 A, besonders bevorzugt 94 A beträgt.

Gegenstand der Erfindung ist ferner ein Verfahren, wobei im Blockierfall zumindest ein akustisches, taktiles oder optisches Signal von der Gartenbearbeitungsmaschine ausgegeben wird.

Erfindungsgemäß wird zudem ein Verfahren vorgeschlagen, wobei, nach Ablauf der zweiten Zeitspanne, das Schneidmesser durch die Antriebseinheit erneut in Vorzugsrichtung angetrieben wird, und zumindest ein weiterer Blockierfall erkannt wird, wenn eine weitere Mindestdrehzahl, insbesondere von mehr als 50 rpm oder mehr als 200 rpm, durch die Antriebseinheit nach einer weiteren Mindestbetriebsdauer, insbesondere von mindestens 2 sec oder 2,8 sec nicht erreicht wird.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: und Fig. 3 eine schematische Darstellung eines Freischneiders in einer perspektivischen Ansicht,
- Fig. 2: und Fig. 4 eine schematische Darstellung eines Rasenmähers in einer Ansicht von unten.

### Beschreibung der Ausführungsbeispiele

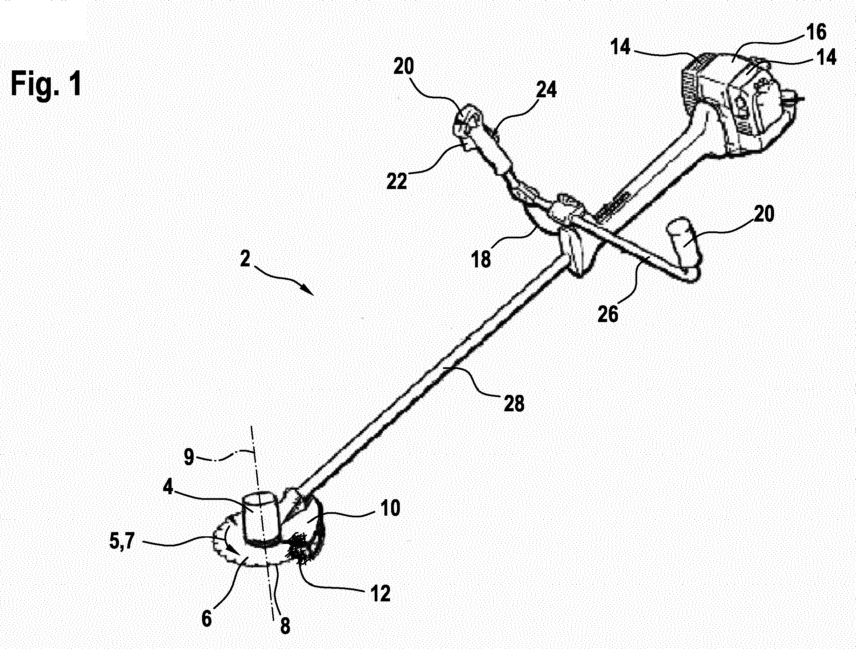

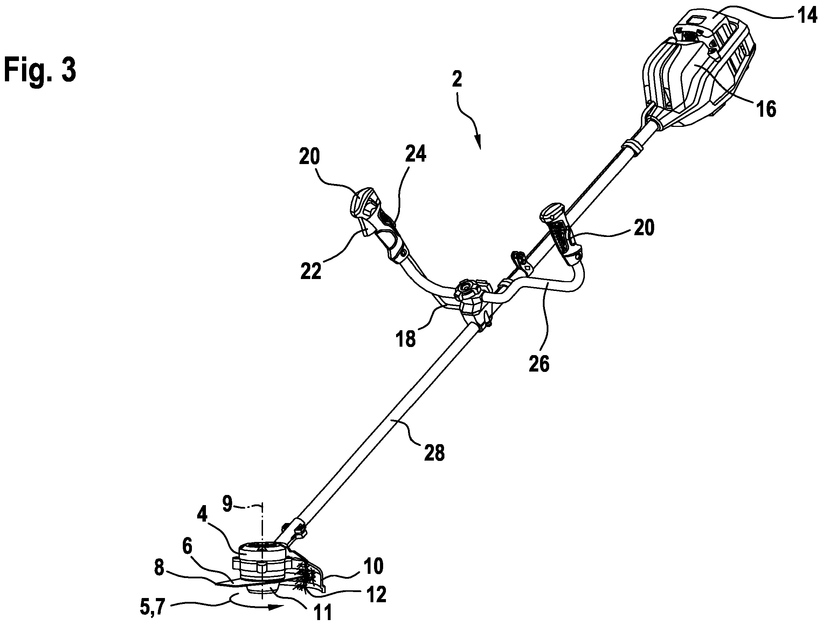

Figur 1 und Figur 3 zeigen einen Freischneider 2, mit einer Antriebseinheit 4. Ferner sind bevorzugt an einem Handgriff 20, welcher über ein Rohrbauteil 26 mit dem Freischneider 2 verbunden ist, zumindest eine Benutzerschnittstelle 22 und bevorzugt eine weitere Benutzerschnittstelle 24 angeordnet. Die zumindest eine Benutzerschnittstelle 22, 24 bevorzugt in Form eines Schwenkschalters, Tasters oder Drehreglers ist über ein Kabel elektrisch mit einer Steuer- und Regeleinheit 16 verbunden. Die Steuer- und Regeleinheit 16, ist über ein weiteres rohr- oder stabförmiges Bauteil 28, insbesondere Teleskoprohr, mit der Antriebseinheit 4 verbunden. Ferner bilden das erste Rohrbauteil 26 und das weitere rohr- oder stabförmige Bauteil 28 ein stabiles Kreuz, womit der Freischneider 2, leicht und bedienerfreundlich über eine Bearbeitungsfläche verschwenkt werden kann. Ferner treibt die Antriebseinheit 4 ein Schneidmesser 6 oder einen Schneidfaden (nicht dargestellt) an. Die Antriebseinheit 4 ist als Elektromotor ausgeführt. Das Schneidmesser 6 ist als eine rotierende Scheibe (gemäß Figur 1) oder ein rotierendes Blatt (gemäß Figur 3) ausgeführt, insbesondere ein rotierendes Schneidmesserblatt. Der Schneidfaden (nicht dargestellt) ist bevorzugt ein auf zumindest einer Spule aufgerollter Faden, welcher insbesondere seine Schnittlänge, gemäß dem einschlägigen Stand der Technik, selbstständig reguliert.
Das Schneidmesser 6 rotiert im normalen Betrieb des Gras- bzw. Freischneiders 2 in eine Vorzugsrichtung 5, wobei unter Schneidmesser 6 im Folgenden auch ein Schneidfaden subsummiert werden soll. Die Vorzugsrichtung 5 entspricht einer Rotation in einer Umfangsrichtung 7 um eine Rotationsachse 9. Die Rotationsachse 9 ist dabei bevorzugt eine Motorwellenachse (nicht näher dargestellt) der Antriebseinheit 4, insbesondere des Elektromotors. Das Schneidmesser 6 trägt oder bildet an seinem äußeren Radius eine Vielzahl von Messern 8 (gemäß Figur 1). Die Messer 8 laufen insbesondere soweit es sich um ein kreisförmiges Schneidmesser 6 handelt bevorzugt spitz zu. Desweiteren sind die Messer 8 an Ihren Kanten angeschliffen. Anstatt einer rotierenden Scheibe kann auch ein rotierender Balken (gemäß Figur 3), oder eine Scheibe mit 2, 3, 4 oder mehr Messern 8 eingesetzt werden. Ferner umgibt das Schneidmesser 6 zumindest partiell eine Fangvorrichtung 10. Unter partiell soll zumindest teilweise, insbesondere über einen gewissen Winkelbereich verstanden werden. Die Fangvorrichtung 10 ist zum Auffangen beziehungsweise ablenken von Schnittgut 12, beispielsweise Gras vorgesehen.

Das Schnittgut 12 wird durch die Fangvorrichtung 10 von einem Anwender (nicht dargestellt) des Freischneiders 2 abgelenkt. Ferner ist die Fangvorrichtung 10 eine Sicherheitsvorrichtung. Sie ist typischerweise aus einem gebogenen Blechteil oder einem insbesondere faserverstärkten Kunststoff oder einem anderen bevorzugt durchschlagfesten und/oder zumindest stabilen Material gebildet. Die Sicherheitsvorrichtung schützt bevorzugt den Körper des Anwenders, insbesondere dessen Füße.

Zwischen dem Schneidmesser 6 und der Fangvorrichtung 10 kann es, insbesondere aufgrund eines geringen Spaltmaßes und/oder eines feuchten Schnittguts 12 zu Blockierfällen kommen. Ein Blockierfall liegt beispielsweise vor, wenn zu viel Schnittgut 12 zwischen dem Schneidmesser 6 und der Fangvorrichtung 10 derart zum Liegen kommt, dass es das Schneidmesser 6 an einer Rotation in die Vorzugsrichtung 5 hindert. Das Antriebsmoment der Antriebseinheit 4 reicht dann nicht mehr aus, das Schneidmesser 6, beispielsweise gegen den Widerstand des Schnittguts 12, weiterhin in Vorzugsrichtung anzutreiben. Ferner kann sich Schnittgut 12 auch um die Schneidmesseraufnahme 11 wickeln und das Schneidmesser 6, bzw. die Antriebseinheit 4 an einer Rotation in Vorzugsrichtung 5 hindern. Es kann aber auch sein, dass das Schneidmesser 6 zwar noch angetrieben werden kann, aber eine Drehzahl derart abfällt oder der Strom der Antriebseinheit 4 derart ansteigt, dass eine Elektronik Gefahr läuft, Schaden zu nehmen. Unter Elektronik soll hier insbesondere der Elektromotor, die Steuer- oder Regeleinheit 16, oder aber die Akkumulatoreinheit 14, ein weiteres (nicht dargestelltes) Kabel, zumindest zwischen der Antriebseinheit 4, der Steuer- oder Regeleinheit 16, oder der Akkumulatoreinheit 14, verstanden werden. Es können aber auch weitere Bauteile der Gartenbearbeitungsmaschine, insbesondere ein Drehmomentübertragungsbauteil zwischen dem Schneidmesser 6 und Antriebseinheit 4, beispielsweise ein Getriebe, ein Riementrieb, eine Kupplung oder andere Antriebsstrangkomponenten, Gefahr laufen, Schaden zu nehmen oder durchzurutschen.

Der Blockierfall liegt vor wenn ein Drehzahlabfall auf 0 Umdrehungen pro Minute oder zumindest auf ein Drehzahlniveau unterhalb eines Schwellwerts oder einer Solldrehzahl bzw. einen Solldrehzahlbereich, vorliegt. Bevorzugt erfolgt diese Unterschreitung für eine gewisse Zeitdauer. Ein Blockierfall beim Freischneider 2 liegt beispielweise vor, wenn die Drehzahl der Antriebseinheit 4, für eine Zeitdauer von mindestens 3 Sekunden, unter einen ersten Schwellwert von 1500 Umdrehungen pro Minute abfällt. Der Blockierfall kann ebenso anhand eines Stromanstiegs des benötigten Stroms der Antriebseinheit 4, insbesondere für eine gewisse Mindestzeitdauer, erkannt werden. Ferner kann der Blockierfall anhand eines Kraft- oder Drehmomentanstiegs einer Antriebsstrangkomponente, insbesondere an der das Schneidmesser 6 antreibenden Welle oder Motorwelle, erkannt werden. Die bevorzugte Detektion des Drehzahlabfalls der Antriebseinheit 4 bzw. der Motorwelle wird mittels eines an der Antriebseinheit 4 platzierten Sensors (nicht dargestellt), insbesondere Hallsensor detektiert.

Der Ablauf eines Blockierfalls wird nun im Folgenden skizziert. Ein Anwender betätigt zum Betreiben des Freischneiders 2 die zumindest eine Benutzerschnittstelle 22, 24 insbesondere während er den Freischneider 2 mittels der Griffe 20 hält und führt. Die Steuer- und Regeleinheit 16 steuert die über Akkumulatoren 14 gespeiste Antriebseinheit 4 derart, dass ein Schneidmesser 6 oder alternativ auch Schneidfaden (nicht dargestellt), mit einer Solldrehzahl bzw. in einem Solldrehzahlbereich in Vorzugsrichtung 5, angetrieben wird. Das Schneidmesser 6 schneidet das Schnittgut 12 in einem Ordnungsgemäßen Betrieb bei einer zugehörigen Solldrehzahl oder in einem zugehörigen Solldrehzahlbereich. Fällt die Drehzahl der Antriebseinheit 4 nun über eine Mindestdauer von beispielsweise 3 Sekunden unter einen definierten Schwellwert von beispielsweise 1500 Umdrehungen pro Minute wird dies durch den an der Antriebseinheit 4 angebrachten Hallsensor erkannt. Es liegt ein erster Blockierfall vor. Die Steuer- und Regeleinheit 16 schaltet die Antriebseinheit 4 daraufhin stromlos. Alternativ kann die Antriebseinheit 4 auch motorisch gebremst werden. Sie kann sogar selbst im Stillstand weiterhin motorisch gebremst sein. Die Antriebseinheit 4 bleibt folglich stehen und/oder schaltet ab.

Der Anwender muss nun die zumindest eine Benutzerschnittstelle 22 lösen. Bei einem erneuten Betätigen der zumindest einen Benutzerschnittstelle 22, 24 steuert die Steuer- oder Regeleinheit 16 die Antriebseinheit 4 erneut zum Zwecke eines Hochlaufes, bzw. eines Beschleunigens auf die Solldrehzahl, bzw. den Solldrehzahlbereich, an. Falls die Drehzahl nach einer ersten Mindestdauer bzw. ersten Zeitspanne von beispielsweise 0,3 Sekunden nicht einen ersten Schwellwert von beispielsweise 30 Umdrehungen pro Minute überschritten hat, wird der zweite Blockierfall detektiert. Die Steuer- und Regeleinheit 16 leitet eine Drehrichtungsumkehr der Antriebseinheit 4, bevorzugt unmittelbar, entgegen der Vorzugsrotationsrichtung 5, bzw. in Gegenvorzugsrotationsrichtung 102 des Schneidmessers 6 ein. Ferner wird die Antriebseinheit 4 bevorzugt mit dem maximal zulässigen Strom beaufschlagt, beispielsweise mit 25 Ampere. Sobald eine zweite Solldrehzahl bzw. zweiter Schwellwert der Antriebseinheit von beispielsweise 100 Umdrehungen und/oder eine zweite Mindestzeitdauer bzw. zweite Zeitspanne von beispielsweise 0,6 Sekunden ab der Drehrichtungsumkehr verstrichen ist, erfolgt eine erneute Drehrichtungsumkehr in Vorzugsrotationsrichtung 5 auf die Solldrehzahl. Falls beispielsweise 2 Sekunden nach der erneuten Drehrichtungsumkehr eine Mindestdrehzahl von 50 Umdrehungen pro Minute nicht erreicht werden kann, wird die Antriebseinheit 4 erneut durch die Steuer- oder Regeleinheit 16 stromlos geschaltet, bzw. abgeschaltet. Es liegt ein weiterer Blockierfall vor. Die zumindest eine Benutzerschnittstelle 22, 24 muss zum erneuten in Betrieb nehmen des Freischneiders 2 erneut gelöst und abermals betätigt werden.

Alternativ zum Drehzahlwert kann auch der Ansteuerungsstrom der Antriebseinheit als Steuer- und Regelwert herangezogen werden. Ebenso ist der Kraft- oder Drehmomentwert, der vorzugsweise mittels eines an einer Antriebsstrangkomponente angebrachten Sensors, insbesondere Dehnmessstreifens, ermittelt werden kann, für die Steuerung oder Regelung der Antriebseinheit 4 geeignet. Ferner kann auch das Signal eines Drucksensors, insbesondere eines in einem Auffangbehälter für Gras, oder an der Fangvorrichtung 10 angebrachten Drucksensors, zur Steuerung und Regelung der Antriebseinheit 4 geeignet sein. Dabei kann insbesondere ein Druckanstieg über einen Drucksollwert zur Detektion eines Blockierfalls herangezogen werden.

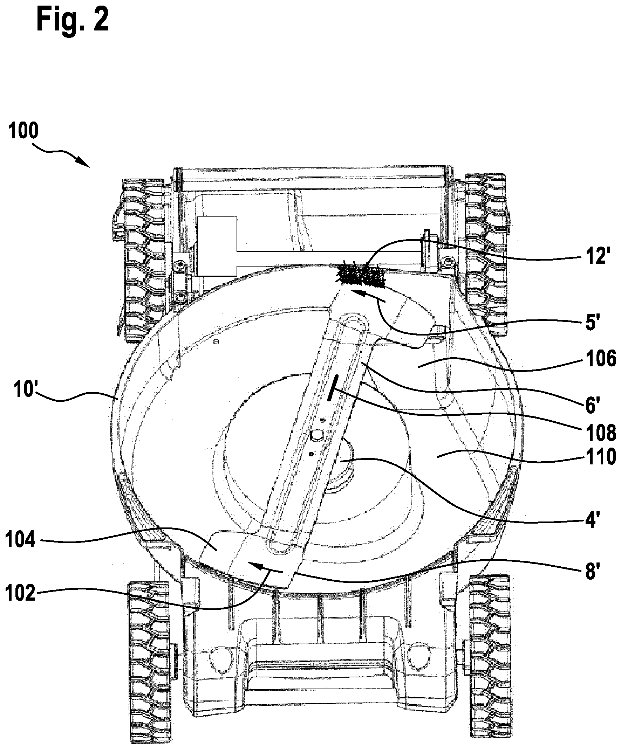

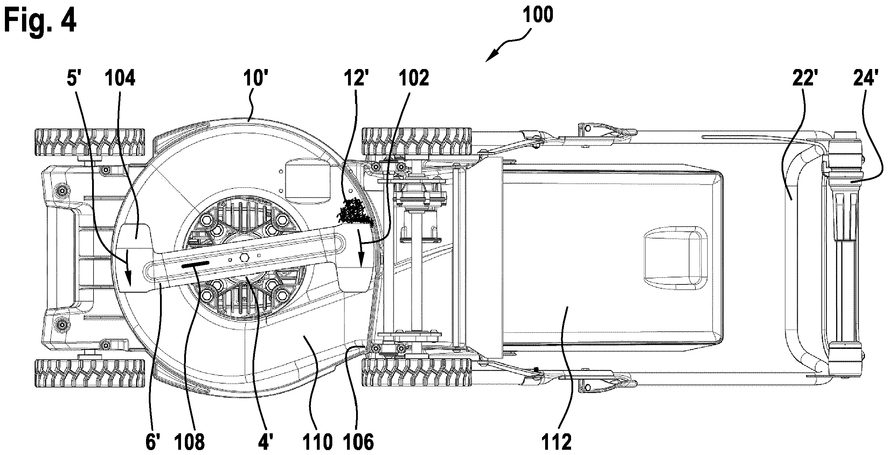

Figur 2 und Figur 4 zeigen ein weiteres Ausführungsbeispiel der Erfindung. Die nachfolgende Beschreibung und die Zeichnung beschränken sich im Wesentlichen auf die Unterschiede zwischen den Ausführungsbeispielen, wobei bezüglich gleich bezeichneter Bauteile grundsätzlich auch auf die Zeichnungen und/oder die Beschreibung des anderen Ausführungsbeispiels gemäß der Figur 1 und Figur 3 verwiesen wird. Zur Unterscheidung der Ausführungsbeispiele ist das Zeichen ' den Bezugszeichen des Ausführungsbeispiels der Figur 2 nachgestellt.

Figur 2 und Figur 4 zeigen einen Rasenmäher 100 mit einer nicht näher dargestellten Steuer- und Regeleinheit zur Steuerung oder Regelung einer Antriebseinheit 4' mit zumindest einer Benutzerschnittstelle 22', 24', die bei einer Betätigung Steuersignale zur Aktivierung der Antriebseinheit 4' an die Steuer- oder Regeleinheit sendet. Ferner weist der Rasenmäher ein mit der Antriebseinheit 4' verbundenes und angetriebenes Schneidmesser 6' auf, welches innerhalb einer Fangvorrichtung 10' in eine Vorzugsrichtung bzw. Vorzugsrotationsrichtung 5' rotiert. Das Schneidmesser 6' ist mittig von der Antriebseinheit 4' aufgenommen und weist ferner in Vorzugsrichtung weisende Messer 8' auf. Am Schneidmesser 6' sind zudem Winglets 104 befestig die gegen die Vorzugsrichtung weisen. Diese Winglets erzeugen bei der Rotation des Schneidmessers 6' in Vorzugsrichtung zumindest einen Luftstrom, der u.a. dazu vorgesehen ist, Schnittgut 12' aus der Fangvorrichtung 10' in einen Auffangbehälter für Schnittgut 112 durch eine Auslassöffnung 106 zu befördern. Der Luftstrom kann auch auf andere Weise erzeugt werden, beispielsweise durch ein in sich verdrehtes Schneidmesser 6'. Ferner können an dem Rasenmäher 100 Sensoren, beispielsweise am Schneidmesser 6' in Form eines Dehnmessstreifens 108, oder in der Fangvorrichtung 10' in Form eines Drucksensors 110, oder an der Antriebseinheit 4' in Form eines Hallsensors (nicht näher dargestellt), oder als Stromsensor (nicht näher dargestellt) zur Detektion eines Blockierfalls angeordnet sein.

Ein Blockierfall im Rasenmäher 100 wird insbesondere dadurch verursacht, dass Schnittgut 12', insbesondere langes und/oder feuchtes Gras das Schneidmesser 6' an einer Rotation in Vorzugsrichtung 5' hindert. Dies kann beispielsweise durch einen Überschuss an Schnittgut 12' in der Fangvorrichtung 10', insbesondere durch einen Rückstau von Schnittgut 12' in der Auslassöffnung 106, durch ein Einklemmen von Schnittgut zwischen der Fangvorrichtung 10' und dem Schneidmesser 6', oder durch ein Umwickeln der Antriebsvorrichtung 4', insbesondere Umwickeln der das Schneidmesser 6' antreibenden Welle (nicht näher dargestellt), verursacht werden.

Der Ablauf eines Blockierfalls im Rasenmäher 100 soll lediglich anhand der Unterschiede zum Freischneider 2 im Folgenden kurz erläutert werden. Das Schneidmesser 6' schneidet das Schnittgut 12' in einem ordnungsgemäßen Betrieb bei einer zugehörigen Solldrehzahl oder in einem zugehörigen Solldrehzahlbereich. Fällt die Drehzahl der Antriebseinheit 4' nun beispielsweise über eine Mindestdauer von 3 Sekunden unter einen definierten Schwellwert von beispielsweise 2500 Umdrehungen pro Minute wird dies durch den an der Antriebseinheit 4' angebrachten Hallsensor erkannt. Zudem kann auch ein Drehmoment-, ein Strom-, Kraft- oder Druckanstieg über die entsprechenden Sensoren erkannt werden. Es liegt ein erster Blockierfall vor. Die Steuer- und Regeleinheit beaufschlagt die Antriebseinheit 4' mit einem Gegenstrom, insbesondere zum raschen Abbremsen der Antriebseinheit 4' oder bremst die Antriebseinheit 4' auf eine andere dem Fachmann bekannte Weise ab. Die Antriebseinheit 4' kann auch stromlos geschaltet werden, insbesondere bei einer bereits geringen Drehzahl. Ein Stillstand der Antriebseinheit 4' muss in beiden Fällen innerhalb von 5 bzw. 3 Sekunden ab der Detektion des Blockierfalls garantiert werden. Daraufhin bleibt die Antriebseinheit 4' stehen und schaltet ab, oder bleibt zur Aufrechterhaltung eines Drehwiderstandes strombeaufschlagt stehen, insbesondere im sogenannten Stillstandsmodus.

Der Anwender muss nun die zumindest eine Benutzerschnittstelle 22', 24' einmal lösen. Bei einem erneuten Bedienen der zumindest einen Benutzerschnittstelle 22', 24' versucht die Steuer- oder Regeleinheit die Antriebseinheit 4' erneut zum Drehen in Vorzugsrichtung 5' zu veranlassen, bzw. die Antriebseinheit 4' auf die Solldrehzahl, bzw. einen Solldrehzahlbereich zu beschleunigen. Falls die Antriebseinheit nach einer ersten Mindestdauer bzw. ersten Zeitspanne von beispielsweise 0,3 Sekunden nicht einen ersten Schwellwert von 30 Umdrehungen pro Minute überschritten hat, wird der zweite Blockierfall detektiert. Die Steuer- und Regeleinheit leitet eine Drehrichtungsumkehr der Antriebseinheit 4' entgegen der Vorzugsrotationsrichtung 5' des Schneidmessers 6' ein. Ferner wird die Antriebseinheit 4' insbesondere mit einem maximal zulässigen Strom beaufschlagt, bevorzugt von 94 Ampere. Sobald eine zweite Solldrehzahl der Antriebseinheit 4' von beispielsweise 100 Umdrehungen erreicht ist und/oder eine zweite Mindestzeitdauer bzw. zweite Zeitspanne von 1 Sekunden ab dem Zeitpunkt der Drehrichtungsumkehr verstrichen ist, erfolgt eine erneute Drehrichtungsumkehr in Vorzugsrotationsrichtung 5' auf die Solldrehzahl. Falls nach beispielsweise mindestens 2,8 Sekunden ab dem Zeitpunkt der erneuten Drehrichtungsumkehr eine Mindestdrehzahl von 200 Umdrehungen pro Minute nicht erreicht ist, wird die Antriebseinheit 4 durch die Steuer- oder Regeleinheit abgebremst, bzw. abgeschaltet. Es liegt ein weiterer Blockierfall vor. Durch Lösen und Betätigen der zumindest einen Benutzerschnittstelle 22', 24' wird das vorgenannte Verfahren ab dem Zeitpunkt des erneuten Bedienens der zumindest einen Benutzerschnittstelle 22', 24' wiederholt.

## Patentansprüche

1. Gartenbearbeitungsmaschine, insbesondere Rasenmäher (100) oder Freischneider (2), mit zumindest einem Schneidmesser (6, 6') oder einem Schneidfaden, insbesondere zum Schneiden von Gras, mit einer Antriebseinheit (4, 4') zum rotierenden Antreiben des Schneidmessers (6, 6') oder des Schneidfadens zumindest in eine Vorzugsrichtung (5, 5'), mit einer Steuer- oder Regeleinheit (16) zur Steuerung oder Regelung der Antriebseinheit (4, 4') und mit zumindest einer Benutzerschnittstelle (22, 24), die bei einer Betätigung zumindest Steuersignale zur Aktivierung der Antriebseinheit (4, 4') an die Steuer- oder Regeleinheit ausgibt, **dadurch gekennzeichnet, dass** die Steuer- oder Regeleinheit (16) zumindest zur Erkennung eines Blockierfalls des Schneidmessers (6, 6') oder des Schneidfadens vorgesehen ist und die Antriebseinheit (4, 4') bei einer Detektion des Blockierfalls abschaltet, wobei die Steuer- oder Regeleinheit (16) die Antriebseinheit (4, 4') bei einer erneuten Betätigung der Benutzerschnittstelle (22, 24) derart steuert oder regelt, dass die Antriebseinheit (4, 4') das Schneidmesser (6, 6') oder den Schneidfaden nach einer ersten Zeitspanne zumindest für eine zweite Zeitspanne entgegen der Vorzugsrichtung (5, 5') antreibt.

2. Gartenbearbeitungsmaschine nach Anspruch 1, **dadurch gekennzeichnet, dass** die Steuer- oder Regeleinheit (16) die Antriebseinheit (4, 4') derart steuert oder regelt, dass die Antriebseinheit (4, 4') das Schneidmesser (6, 6') oder den Schneidfaden nach der zweiten Zeitspanne erneut in Vorzugsrichtung (5, 5') antreibt.

3. Gartenbearbeitungsmaschine nach Anspruch 1 oder 2, **dadurch gekennzeichnet, dass** die Steuer- oder Regeleinheit (16) den Blockierfall mittels eines Sensors, insbesondere mittels eines an der Motoreinheit, der Schneidmessereinheit oder der Schneidfadeneinheit, oder zumindest an der Gartenbearbeitungsmaschine applizierten und mit der Steuer- oder Regeleinheit (16) in Verbindung stehenden Hall-, Strom-, Kraft-, Druck- (110) oder Dehnmesssensors (108), erkennt.

4. Gartenbearbeitungsmaschine nach Anspruch 1 bis 3, **dadurch gekennzeichnet, dass** die Steuer- oder Regeleinheit (16) den Blockierfall zumindest an einer Motorwelle der Antriebseinheit (4, 4'), sensorlos, insbesondere aus Parametern der Steuer- oder Regeleinheit (16), erkennt.

5. Gartenbearbeitungsmaschine nach Anspruch 3 oder 4, **dadurch gekennzeichnet, dass** die Steuer- oder Regeleinheit (16) den Blockierfall durch einen Drehzahlabfall der Antriebseinheit (4, 4'), eine Stromzunahme des an der Antriebseinheit (4, 4') anliegenden Stroms oder einen Kraft-, Druck- oder Drehmomentanstieg erkennt.

6. Gartenbearbeitungsmaschine nach Anspruch 1 bis 5, **dadurch gekennzeichnet, dass** die Gartenbearbeitungsmaschine bei der Erkennung eines Blockierfalls zumindest ein akustisches, taktiles oder optisches Signal ausgibt.

7. Gartenbearbeitungsmaschine nach Anspruch 1 bis 6, **dadurch gekennzeichnet, dass** die Steuer- oder Regeleinheit (16) die Antriebseinheit (4, 4') beim Antrieb entgegen der Vorzugsrichtung mit maximal verfügbarem Strom ansteuert.

8. Verfahren zum Betreiben einer Gartenbearbeitungsmaschine, insbesondere eines Rasenmähers (100) oder Freischneiders (2), mit einer Benutzerschnittstelle (22, 24) und mit einer Antriebseinheit (4, 4') zum rotierenden Antreiben eines Schneidmessers (6, 6') oder eines Schneidfadens zum Schneiden von Gras, wobei das Schneidmesser (6, 6') oder der Schneidfaden durch die Antriebseinheit (4, 4'), nach betätigen der Benutzerschnittstelle (22, 24), in eine Vorzugsrichtung (5, 5') angetrieben wird, **dadurch gekennzeichnet, dass** die Antriebseinheit (4, 4'), nach einer Detektion eines Blockierfalls des Schneidmessers (6, 6') oder Schneidfadens durch eine Steuer- oder Regeleinheit (16), von der Steuer- oder Regeleinheit (16) abgeschaltet wird, und das Schneidmesser (6, 6') oder der Schneidfaden durch die Antriebseinheit (4, 4'), bei einer erneuten Betätigung der Benutzerschnittstelle (22, 24) nach einer ersten definierten Zeitspanne für zumindest eine zweite definierte Zeitspanne entgegen der Vorzugsrichtung (5, 5') angetrieben wird.

9. Verfahren nach Anspruch 8, wobei der Blockierfall vorliegt, wenn für eine Mindestdauer, insbesondere von mehr als 0,1 Sekunden, eine Antriebsdrehzahl der Antriebseinheit (4, 4') einen Soll- oder Schwellwert unterschreitet, insbesondere im Falle eines Rasenmähers von weniger als 2500 rpm (Umdrehungen pro Minute) oder im Falle eines Freischneiders von weniger als 1500 rpm, und/oder eine Stromaufnahme der Antriebseinheit (4, 4') einen Sollwert übersteigt, insbesondere einen Sollwert von mehr als 10 A (Ampere), im Falle eines Freischneiders (2) bevorzugt 25 A oder im Falle eines Rasenmähers (100) bevorzugt 94 A.

10. Verfahren nach Anspruch 8 oder 9, wobei das Schneidmesser (6, 6') oder der Schneidfaden innerhalb der ersten definierten Zeitspanne erneut in Vorzugsrichtung (5, 5') angetrieben wird.

11. Verfahren nach Anspruch 8 bis 10, wobei die erste und die zweite definierte Zeitspanne durch ein Unter- oder Überschreiten eines ersten oder zweiten Schwellwerts für eine Drehzahl der Antriebseinheit (4, 4') und/oder durch ein Unter- oder Überschreiten eines ersten oder zweiten Schwellwerts für eine Stromaufnahme der Antriebseinheit (4, 4') und/oder durch eine erste oder zweite Zeitdauer definiert sind.

12. Verfahren nach Anspruch 11, wobei für die erste Zeitspanne nach einer Mindestzeitdauer von mehr als 0,1 sec (Sekunden), bevorzugt mehr als 0,3 sec, der Schwellwert für die Drehzahl der Antriebseinheit (4, 4') weniger als 50 rpm, bevorzugt weniger als 30 rpm und/oder der Schwellwert für den Strom der Antriebseinheit (4, 4') mehr als 10 A, insbesondere im Falle eines Freischneiders (2) 25 A oder im Falle eines Rasenmähers (100) 94 A beträgt.

13. Verfahren nach Anspruch 11, wobei für die zweite Zeitspanne der Schwellwert für die Drehzahl der Antriebseinheit (4, 4') mindestens 50 rpm, bevorzugt 100 rpm und/oder die Zeitdauer 0 bis 3 sec, bevorzugt 1 sec im Falle des Rasenmähers (100) und rund 0,7 sec im Falle des Freischneiders (2), und/oder der Schwellwert für den Strom der Antriebseinheit (4, 4') nach der Zeitdauer mehr als 10 A, insbesondere im Falle des Freischneiders (2) 25 A oder im Falle des Rasenmähers (100) 94 A beträgt.

14. Verfahren nach Anspruch 8 bis 13, wobei im Blockierfall zumindest ein akustisches, taktiles oder optisches Signal von der Gartenbearbeitungsmaschine ausgegeben wird.

15. Verfahren nach Anspruch 8 bis 14, wobei, nach Ablauf der zweiten Zeitspanne, das Schneidmesser (6, 6') oder der Schneidfaden durch die Antriebseinheit (4, 4') erneut in Vorzugsrichtung (5,5') angetrieben wird und zumindest ein weiterer Blockierfall erkannt wird, wenn eine weitere Mindestdrehzahl, insbesondere von mehr als 50 rpm im Falle eines Freischneiders (2) oder mehr als 200 rpm im Falle eines Rasenmähers (100) durch die Antriebseinheit (4, 4') nach einer weiteren Mindestbetriebsdauer, insbesondere von mindestens 2 sec im Falle eines Freischneiders (2) oder mindestens 2,8 sec im Falle eines Rasenmähers (100), nicht erreicht wird.

## Claims

1. Gardening machine, in particular lawn mower (100) or brush cutter (2), having at least one cutting blade (6, 6') or a cutting thread, in particular for cutting grass, having a drive unit (4, 4') for driving the cutting blade (6, 6') or the cutting thread in rotation at least in a preferential direction (5, 5'), having a control or regulation unit (16) for controlling or regulating the drive unit (4, 4') and having at least one user interface (22, 24) which, upon actuation, outputs at least control signals for activating the drive unit (4, 4') to the control or regulation unit, **characterized in that** the control or regulation unit (16) is intended at least to detect a blockage of the cutting blade (6, 6') or of the cutting thread, and switches off the drive unit (4, 4') upon detection of the blockage, wherein, upon reactuation of the user interface (22, 24), the control or regulation unit (16) controls or regulates the drive unit (4, 4') such that the drive unit (4, 4') drives the cutting blade (6, 6') or the cutting thread counter to the preferential direction (5, 5'), at least for a second period after a first period.

2. Gardening machine according to Claim 1, **characterized in that** the control or regulation unit (16) controls or regulates the drive unit (4, 4') such that the drive unit (4, 4') drives the cutting blade (6, 6') or the cutting thread in the preferential direction (5, 5') again after the second period.

3. Gardening machine according to Claim 1 or 2, **characterized in that** the control or regulation unit (16) detects the blockage by means of a sensor, in particular by means of a Hall, current, force, pressure (110) or strain sensor (108) applied to the motor unit, the cutting blade unit or the cutting thread unit, or at least to the gardening machine, and connected to the control or regulation unit (16).

4. Gardening machine according to Claims 1 to 3, **characterized in that** the control or regulation unit (16) detects the blockage in a sensor-free manner, in particular from parameters of the control or regulation unit (16), at least at a motor shaft of the drive unit (4, 4').

5. Gardening machine according to Claim 3 or 4, **characterized in that** the control or regulation unit (16) detects the blockage through a drop in speed of the drive unit (4, 4'), an increase in current of the current applied to the drive unit (4, 4') or an increase in force, pressure or torque.

6. Gardening machine according to Claims 1 to 5, **characterized in that** the gardening machine emits at least an audible, tactile or visual signal upon detection of a blockage.

7. Gardening machine according to Claims 1 to 6, **characterized in that** the control or regulation unit (16) energizes the drive unit (4, 4') with the maximum available current when driving counter to the preferential direction.

8. Method for operating a gardening machine, in particular a lawn mower (100) or brush cutter (2), having a user interface (22, 24) and having a drive unit (4, 4') for driving a cutting blade (6, 6') or a cutting thread for cutting grass in rotation, wherein the cutting blade (6, 6') or the cutting thread is driven in a preferential direction (5, 5') by the drive unit (4, 4') following actuation of the user interface (22, 24), **characterized in that**, following detection of a blockage of the cutting blade (6, 6') or cutting thread by a control or regulation unit (16), the drive unit (4, 4') is switched off by the control or regulation unit (16), and, upon reactuation of the user interface (22, 24), the cutting blade (6, 6') or the cutting thread is driven counter to the preferential direction (5, 5') by the drive unit (4, 4'), for at least a second defined period after a first defined period.

9. Method according to Claim 8, wherein the blockage exists when a drive speed of the drive unit (4, 4') drops below a setpoint or threshold value, in particular less than 2500 rpm (revolutions per minute) in the case of a lawn mower or less than 1500 rpm in the case of a brush cutter, and/or a current consumption of the drive unit (4, 4') exceeds a setpoint value, in particular a setpoint value of more than 10 A (amperes), preferably 25 A in the case of a brush cutter (2) or preferably 94 A in the case of a lawn mower (100), for a minimum duration, in particular for more than 0.1 second.

10. Method according to Claim 8 or 9, wherein the cutting blade (6, 6') or the cutting thread is driven in the preferential direction (5, 5') again within the first defined period.

11. Method according to Claims 8 to 10, wherein the first and the second defined periods are defined by a first or second threshold value for a speed of the drive unit (4, 4') being dropped below or exceeded and/or by a first or second threshold value for a current consumption of the drive unit (4, 4') being dropped below or exceeded, and/or by a first or second duration.

12. Method according to Claim 11, wherein, for the first period after a minimum duration of more than 0.1 s (second), preferably more than 0.3 s, the threshold value for the speed of the drive unit (4, 4') is less than 50 rpm, preferably less than 30 rpm, and/or the threshold value for the current of the drive unit (4, 4') is more than 10 A, in particular 25 A in the case of a brush cutter (2) or 94 A in the case of a lawn mower (100).

13. Method according to Claim 11, wherein, for the second period, the threshold value for the speed of the drive unit (4, 4') is at least 50 rpm, preferably 100 rpm, and/or the duration is 0 to 3 s, preferably 1 s in the case of the lawn mower (100) and around 0.7 s in the case of the brush cutter (2), and/or the threshold value for the current of the drive unit (4, 4') after the duration is more than 10 A, in particular 25 A in the case of the brush cutter (2) or 94 A in the case of the lawn mower (100).

14. Method according to Claims 8 to 13, wherein, in the event of a blockage, at least one audible, tactile or visual signal is emitted by the gardening machine.

15. Method according to Claims 8 to 14, wherein, after the second period has ended, the cutting blade (6, 6') or the cutting thread is driven in the preferential direction (5, 5') again by the drive unit (4, 4') and at least one further blockage is detected when a further minimum speed, in particular more than 50 rpm in the case of a brush cutter (2) or more than 200 rpm in the case of a lawn mower (100), is not reached by the drive unit (4, 4') after a further minimum operation time, in particular at least 2 s in the case of a brush cutter (2) or at least 2.8 s in the case of a lawn mower (100).

## Revendications

1. Machine de travail pour le jardin, en particulier tondeuse à gazon (100) ou débroussailleuse (2), comprenant au moins une lame de coupe (6, 6') ou un fil de coupe, en particulier pour couper de l'herbe, comprenant une unité d'entraînement (4, 4') pour l'entraînement en rotation de la lame de coupe (6, 6') ou du fil de coupe au moins dans une direction d'avance (5, 5'), comprenant une unité de commande ou de réglage (16) pour commander ou régler l'unité d'entraînement (4, 4') et comprenant au moins une interface utilisateur (22, 24) qui, lors d'un actionnement, envoie au moins des signaux de commande pour l'activation de l'unité d'entraînement (4, 4') à l'unité de commande ou de réglage, **caractérisée en ce que** l'unité de commande ou de réglage (16) est prévue au moins pour détecter un blocage de la lame de coupe (6, 6') ou du fil de coupe et coupe l'unité d'entraînement (4, 4') dans le cas d'une détection du blocage, l'unité de commande ou de réglage (16), lors d'un nouvel actionnement de l'interface utilisateur (22, 24), commandant ou réglant l'unité d'entraînement (4, 4') de telle sorte que l'unité d'entraînement (4, 4') entraîne la lame de coupe (6, 6') ou le fil de coupe après un premier intervalle de temps au moins pendant un deuxième intervalle de temps dans le sens inverse du sens d'avance (5, 5').

2. Machine de travail pour le jardin selon la revendication 1, **caractérisée en ce que** l'unité de commande ou de réglage (16) commande ou règle l'unité d'entraînement (4, 4') de telle sorte que l'unité d'entraînement (4, 4') entraîne la lame de coupe (6, 6') ou le fil de coupe après le deuxième intervalle de temps à nouveau dans le sens de l'avance (5, 5').

3. Machine de travail pour le jardin selon la revendication 1 ou 2, **caractérisée en ce que** l'unité de commande ou de réglage (16) détecte le blocage au moyen d'un capteur, en particulier au moyen d'un capteur de Hall, d'un capteur de mesure de courant, d'un capteur de mesure de force, d'un capteur de mesure de pression (110) ou d'un capteur de mesure d'allongement (108) appliqué à l'unité de moteur, à l'unité de lame de coupe ou à l'unité de fil de coupe, ou au moins à la machine de travail pour le jardin et en liaison avec l'unité de commande ou de réglage (16).

4. Machine de travail pour le jardin selon les revendications 1 à 3, **caractérisée en ce que** l'unité de commande ou de réglage (16) détecte le blocage au niveau d'au moins un arbre de moteur de l'unité d'entraînement (4, 4') sans capteur, notamment à partir de paramètres de l'unité de commande ou de réglage (16).

5. Machine de travail pour le jardin selon la revendication 3 ou 4, **caractérisée en ce que** l'unité de commande ou de réglage (16) détecte le blocage par une diminution de la vitesse de rotation de l'unité d'entraînement (4, 4'), une augmentation du courant appliqué à l'unité d'entraînement (4, 4') ou une augmentation de la force, de la pression ou du couple.

6. Machine de travail pour le jardin selon les revendications 1 à 5, **caractérisée en ce que** la machine de travail pour le jardin, à la détection d'un blocage, émet au moins un signal acoustique, tactile ou optique.

7. Machine de travail pour le jardin selon les revendications 1 à 6, **caractérisée en ce que** l'unité de commande ou de réglage (16) commande l'unité d'entraînement (4, 4') lors de l'entraînement dans le sens opposé au sens de l'avance avec un courant disponible maximal.

8. Procédé pour faire fonctionner une machine de travail pour le jardin, en particulier une tondeuse à gazon (100) ou débroussailleuse (2), avec une interface utilisateur (22, 24) et avec une unité d'entraînement (4, 4') pour l'entraînement en rotation d'une lame de coupe (6, 6') ou d'un fil de coupe pour couper de l'herbe, la lame de coupe (6, 6') ou le fil de coupe étant entraîné(e) par l'unité d'entraînement (4, 4') après l'actionnement de l'interface utilisateur (22, 24), dans un sens d'avance (5, 5'), **caractérisé en ce que** l'unité d'entraînement (4, 4'), à la détection d'un blocage de la lame de coupe (6, 6') ou du fil de coupe par l'unité de commande ou de réglage (16), est coupée par l'unité de commande ou de réglage (16) et la lame de coupe (6, 6') ou le fil de coupe est entraîné(e) par l'unité d'entraînement (4, 4'), lors d'un nouvel actionnement de l'interface utilisateur (22, 24) après un premier intervalle de temps défini pendant au moins un deuxième intervalle de temps défini dans le sens opposé au sens d'avance (5, 5').

9. Procédé selon la revendication 8, dans lequel le blocage a lieu lorsque pendant une durée minimale, en particulier de plus de 0,1 seconde, une vitesse de rotation d'entraînement de l'unité d'entraînement (4, 4') est en dessous d'une valeur de consigne ou d'une valeur seuil, en particulier dans le cas d'une tondeuse à gazon, est en dessous de 2500 tr/m (tours par minute) ou dans le cas d'une débroussailleuse, est en dessous de 1500 tr/m, et/ou lorsqu'une consommation de courant de l'unité d'entraînement (4, 4') dépasse une valeur de consigne, en particulier une valeur de consigne de plus de 10 A (Ampères), dans le cas d'une débroussailleuse (2) de préférence de 25 A ou dans le cas d'une tondeuse à gazon (100) de préférence de 94 A.

10. Procédé selon la revendication 8 ou 9, dans lequel la lame de coupe (6, 6') ou le fil de coupe est entraîné à nouveau dans le sens d'avance (5, 5') pendant le premier intervalle de temps défini.

11. Procédé selon les revendications 8 à 10, dans lequel le premier et le deuxième intervalle de temps défini sont définis par un passage en dessous ou au-dessus d'une première ou d'une deuxième valeur de seuil pour une vitesse de rotation de l'unité d'entraînement (4, 4') et/ou par un passage en dessous ou au-dessus d'une première ou d'une deuxième valeur de seuil pour une consommation de courant de l'unité d'entraînement (4, 4') et/ou par une première ou une deuxième durée.

12. Procédé selon la revendication 11, dans lequel, pour le premier intervalle de temps après une durée minimale supérieure à 0,1 s (seconde), de préférence supérieure à 0,3 s, la valeur de seuil pour la vitesse de rotation de l'unité d'entraînement (4, 4') est inférieure à 50 tr/m, de préférence inférieure à 30 tr/m, et/ou la valeur de seuil pour le courant de l'unité d'entraînement (4, 4') est supérieure à 10 A, en particulier dans le cas d'une débroussailleuse (2) 25 A ou dans le cas d'une tondeuse à gazon (100) 94 A.

13. Procédé selon la revendication 11, dans lequel, pour le deuxième intervalle de temps, la valeur de seuil pour la vitesse de rotation de l'unité d'entraînement (4, 4') est d'au moins 50 tr/m de préférence 100 tr/m et/ou la durée est de 0 à 3 s, de préférence 1 s dans le cas de la tondeuse à gazon (100) et d'environ 0,7 s dans le cas de la débroussailleuse (2), et/ou la valeur de seuil pour le courant de l'unité d'entraînement (4, 4') après l'intervalle de temps est supérieure à 10 A, en particulier dans le cas de la débroussailleuse (2) 25 A ou dans le cas de la tondeuse à gazon (100) 94 A.

14. Procédé selon les revendications 8 à 13, dans lequel, en cas de blocage, au moins un signal acoustique, tactile ou optique est émis par la machine de travail pour le jardin.

15. Procédé selon les revendications 8 à 14, dans lequel, après l'écoulement du deuxième intervalle de temps, la lame de coupe (6, 6') ou le fil de coupe est à nouveau entraîné(e) dans le sens d'avance (5, 5') par l'unité d'entraînement (4, 4') et au moins un blocage supplémentaire est détecté lorsqu'une vitesse de rotation minimale supplémentaire, en particulier supérieure à 50 tr/m, dans le cas d'une débroussailleuse (2) ou supérieure à 200 tr/m dans le cas d'une tondeuse à gazon (100) n'est pas atteinte par l'unité d'entraînement (4, 4') après une durée de fonctionnement minimale supplémentaire, en particulier d'au moins 2 s dans le cas d'une débroussailleuse (2) ou d'au moins 2,8 s dans le cas d'une tondeuse à gazon (100).
